# EUROPEAN PATENT APPLICATION

(11) **EP 2 337 370 A2**
(43) Date of publication of application: **22.06.2011**
(21) Application number: 10193288.7
(22) Date of filing: 01.12.2010
(51) Int. Cl.: H04N 13/00

(54) **3D glasses, method for controlling 3D glasses, and method for controlling power applied thereto**

(30) Priority: 21.12.2009 KR 20090127973
(71) Applicant: SAMSUNG ELECTRONICS CO., LTD., Suwon-si, Gyeonggi-do (KR)
(72) Inventor: Yun, Sang-un, Seoul (KR); Seong, Ki-bum, Gyeonggi-do (KR); Park, Jung-jin, Gyeonggi-do (KR); Kim, Hyung-rae, Seoul (KR); Choi, Nak-won, Incheon (KR)
(74) Representative: Bruce, Alexander Richard Henry

(57) **Abstract**

Three-dimensional (3D) glasses, a method for controlling 3D glasses, and a method for controlling an on/off operation of the 3D glasses are provided. The 3D glasses rotate a glass unit based on sensed motion information to maintain a polarization direction of the glass unit in a particular direction. Therefore, a user may view 3D images in various positions. In addition, a user manages the on/off operation of the 3D glasses using the sensed motion information, thereby conveniently viewing 3D images in various positions.

## Description

The present invention relates to three-dimensional (3D) glasses, a method for controlling 3D glasses, and a method for controlling power applied to 3D glasses, and more particularly, to 3D glasses used in a 3D display apparatus which displays a 3D image, a method for controlling 3D glasses, and a method for controlling power applied to 3D glasses.

Three dimensional (3D) image display technology is applied in a wide variety of fields, including communications, broadcasting, medical services, education, the military, computer games, computer animation, virtual reality, computer-aided design (CAD), industrial technology, and the like. Furthermore, 3D image display technology is at the core of current development for the next generation of information communication, for which there is currently a highly competitive development environment.

A person perceives a 3D effect due to various reasons, including variations in a thickness of lenses of the person's eyes, an angle between the person's eyes and a subject, a position of the subject as viewed through both eyes, a parallax caused by a motion of the subject, psychological effects, etc.

Binocular disparity, which refers to a difference between images of an object as seen by the left and right eyes due to the horizontal separation of the eyes by about 6 to 7 cm, is an important factor in producing a 3D feeling. The left and right eyes see different two-dimensional images which are transmitted to the brain through the retina. The brain then fuses these two different images with high accuracy to reproduce a sense of a 3D image.

There are two types of 3D image display apparatuses: a glass type apparatus and a non-glass type apparatus. Glass type apparatuses include a colour filter type apparatus which filters an image using a colour filter including complementary colour filter segments, a polarizing filter type apparatus which divides an image into a left eye image and a right eye image using a shading effect caused by a polarized light element, the directions of which are orthogonal to each other, and a shutter glass type apparatus which alternately blocks a left eye and right eye to correspond to a synchronization signal.

Shutter glass type apparatuses use different perspectives for each eye, which provides an image on the display device while turning each eye on or off, so that the user perceives a sense of space from an image viewed at different angles. Accoridngly, a user should wear 3D glasses to view a 3D image. However, since 3D glasses are used infrequently, power of the 3D glasses needs to be managed efficiently. In addition, as 3D glasses cause a brightness of an image to vary according to the direction of polarized light, the user experiences inconvenience in viewing a 3D image because the user needs to keep his or her position. Therefore, there is a need for a method which enables a user to use 3D glasses more conveniently.

Exemplary embodiments address at least the above problems and/or disadvantages and other disadvantages not described above. Also, an exemplary embodiment is not required to overcome the disadvantages described above, and an exemplary embodiment may not overcome any of the problems described above.

Exemplary embodiments provide three-dimensional (3D) glasses which rotate a glass unit based on sensed motion information so as to maintain a polarization direction of the glass unit in a certain direction, a method for controlling 3D glasses, and a method for controlling power applied to 3D glasses.

According to an aspect of an exemplary embodiment, there is provided 3D glasses to view a 3D display apparatus, the 3D glasses including: a glass unit through which light is polarized; a driving unit which rotates the glass unit; a motion sensor which senses motion information as to a motion of the 3D glasses; and a controller which controls the driving unit to rotate the glass unit based on the sensed motion information in order to maintain a polarization direction of the glass unit in a particular direction.

The motion sensor may sense a rotation direction and a rotation angle of the 3D glasses, and the controller may control the glass unit to be rotated in a direction opposite the sensed rotation direction at the sensed angle.

The particular direction may correspond to a polarization direction of an image output from the 3D display apparatus.

The glass unit may include a left eye glass and a right eye glass which are rotatable.

The glass unit may include a left eye glass including liquid crystal and a right eye glass including liquid crystal.

According to an aspect of another exemplary embodiment, there is provided a method for controlling 3D glasses to view a 3D display apparatus, the method including: sensing motion information on a motion of the 3D glasses; and rotating a glass unit of the 3D glasses based on the sensed motion information to maintain a polarization direction of the 3D glasses in a particular direction.

The sensing may include sensing a rotation direction and a rotation angle of the 3D glasses, and the rotating may rotate the glass unit in a direction opposite the sensed rotation direction at the sensed angle.

The particular direction may correspond to a polarization direction of an image output from the 3D display apparatus.

The glass unit may include a left eye glass and a right eye glass which are rotatable.

The glass unit may include a left eye glass including liquid crystal and a right eye glass including liquid crystal.

According to an aspect of another exemplary embodiment, there is provided 3D glasses to view a 3D display apparatus, the 3D glasses including: a motion sensor which senses motion information on a motion of the 3D glasses; and a controller which controls an on/off operation of the 3D glasses based on the sensed motion information of the 3D glasses.

The controller may calculate a slope of the 3D glasses with respect to a gravity direction, and control an on/off operation of the 3D glasses according to the slope.

In response to the calculated slope of the 3D glasses being within a predetermined range, the controller may control the 3D glasses to be on, and in response to the calculated slope of the 3D glasses being outside of the predetermined range, the controller may control the 3D glasses to be off.

According to an aspect of another exemplary embodiment, there is provided a method for controlling an on/off operation of 3D glasses to view a 3D display apparatus, the method including: sensing motion information on a motion of the 3D glasses; and controlling the on/off operation of the 3D glasses based on the sensed motion information of the 3D glasses.

The controlling may include: calculating a slope of the 3D glasses with respect to a gravity direction based on the motion information of the 3D glasses; and controlling the on/off operation of the 3D glasses according to the calculated slope.

The controlling may include, in response to the calculated slope of the 3D glasses being within a predetermined range, controlling the 3D glasses to be on, and in response to the calculated slope of the 3D glasses being outside of the predetermined range, controlling the 3D glasses to be off.

According to an aspect of another exemplary embodiment, there is provided a 3D image providing system including: a 3D display apparatus to output a 3D image; and 3D glasses to view the 3D image, the 3D glasses including: a glass unit through which light is polarized, a driving unit which rotates the glass unit, a motion sensor which senses motion information as to a motion of the 3D glasses; and a controller which performs at least one of controlling the driving unit to rotate the glass unit based on the sensed motion information in order to maintain a polarization direction of the glass unit in a direction and controlling an on/off operation of the 3D glasses based on the sensed motion information.

The above and/or other aspects will be more apparent by describing certain exemplary embodiments with reference to the accompanying drawings, in which:
FIG. 1 is a view illustrating a system which provides a three-dimensional (3D) image according to an exemplary embodiment;
FIGs. 2A to 2F are views provided to explain a 3D image format according to an exemplary embodiment;
FIG. 3 is a block diagram illustrating a television (TV) according to an exemplary embodiment;
FIGs. 4A to 4C are views provided to explain a method for processing a 3D image for each format according to an exemplary embodiment;
FIG. 5A is a perspective view illustrating an appearance of 3D glasses according to an exemplary embodiment;
FIG. 5B is a block diagram illustrating 3D glasses according to an exemplary embodiment;
FIG. 6 is a flowchart provided to explain a method for controlling 3D glasses to maintain a polarized light in a certain direction according to an exemplary embodiment;
FIGs. 7A to 7C are views provided to explain a process of rotating a glass unit to maintain polarized light of 3D glasses in a certain direction according to an exemplary embodiment;
FIG. 8 is a flowchart provided to explain a method for controlling an on/off operation of 3D glasses in accordance with a slope of the 3D glasses according to an exemplary embodiment; and
FIGs. 9A to 9C are views provided to explain a process of controlling an on/off operation of 3D glasses in accordance with a slope of the 3D glasses according to an exemplary embodiment.

Certain exemplary embodiments will now be described in greater detail with reference to the accompanying drawings. In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail. Expressions such as "at least one of," when preceding a list of elements, modify the entire list of elements and do not modify the individual elements of the list.

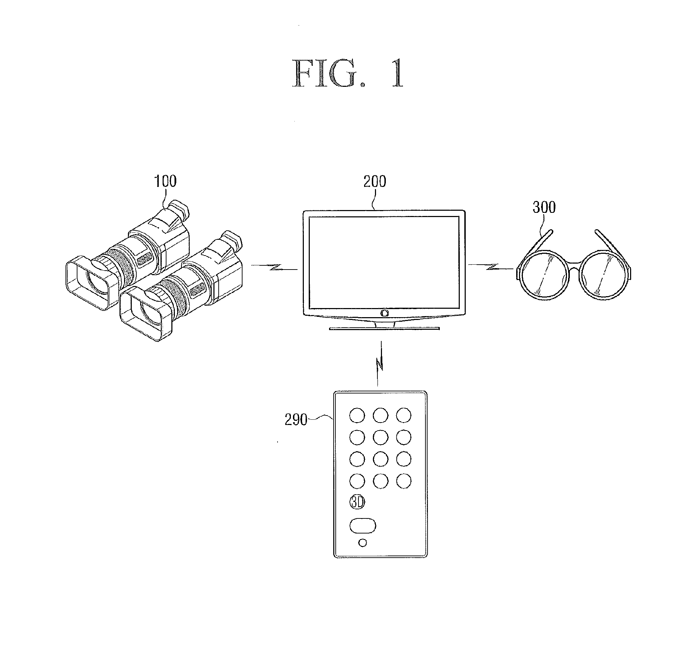

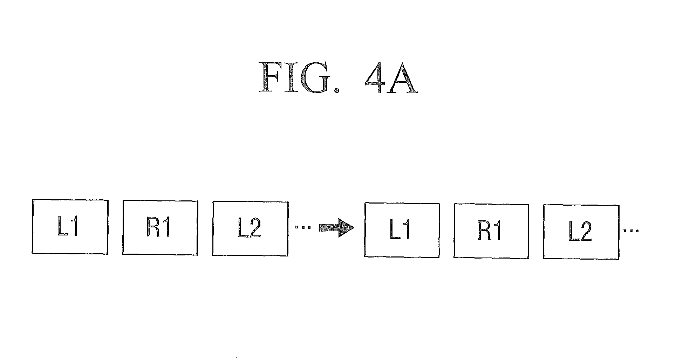

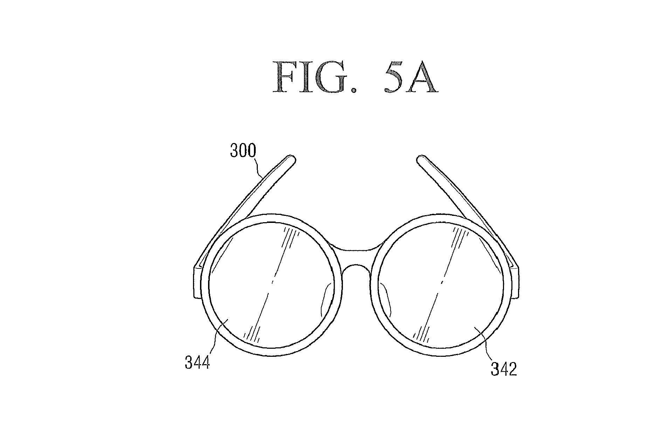

An operational principle and a structure of a system which provides a three-dimensional (3D) image according to one or more exemplary embodiments will be explained with reference to FIGs. 1 to 3, a process of processing a 3D image according to one or more exemplary embodiments will be explained with reference to FIGs. 4A to 4C, and a method for controlling 3D glasses and a method for controlling power applied to 3D glasses according to one or more exemplary embodiments will be explained with reference to FIGs. 5A to 9C.

FIG. 1 is a view illustrating a system which provides a 3D image according to an exemplary embodiment. Referring to FIG. 1, the 3D image providing system includes a camera 100 which generates a 3D image, a television (TV) 200 which displays a 3D image on a screen, a remote controller 290 which controls the TV 200, and 3D glasses 300 which enable a user to view a 3D image.

The camera 100 is a kind of photographing apparatus used to generate a 3D image. The camera 100 generates a left eye image and a right eye image to provide each eye of a user with the left eye image and the right eye image. That is, a 3D image includes a left eye image and a right eye image, and these images are alternately provided to the user's left and right eyes, thereby creating a stereoscopic effect due to binocular disparity producing a 3D feeling.

To achieve the stereoscopic effect, the camera 100 includes a left eye camera or lens which generates a left eye image and a right eye camera or lens which generates a right eye image. Furthermore, a distance between the left eye camera or lens and the right eye camera or lens is determined according to a distance between the user's eyes.

The camera 100 transmits the generated left eye image and right eye image to the TV 200. The camera 100 may transmit an image which includes a single frame having either the left eye image or the right eye image or an image which includes a single frame having both the left eye image and the right eye image.

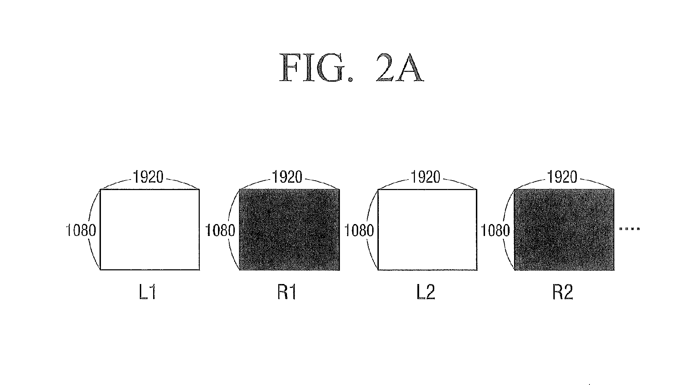

Hereinbelow, a 3D image format transmitted to a TV 200 according to one or more exemplary embodiments will be explained in more detail with reference to FIGs. 2A to 2F. In FIGs. 2A to 2F, a left eye image is illustrated with white and a right eye image is illustrated with black for convenience of description.

FIG. 2A is a view illustrating a format of a 3D image employing a usual frame sequence method according to an exemplary embodiment. In the 3D image format employing the frame sequence method, a single frame includes either one left eye image or one right eye image.

According to the 3D image format employing the frame sequence method, a 3D image having, for example, a resolution of 1920X1080 includes a frame having a first left eye image L1 photographed by a left eye camera or lens, a frame having a first right eye image R1 photographed by a right eye camera or lens, a frame having a second left eye image L2 photographed by the left eye camera or lens, a frame having a second right eye image R2 photographed by the right eye camera or lens, etc.

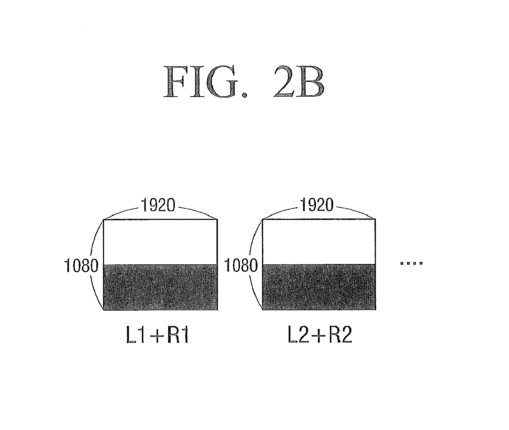

FIG. 2B is a view illustrating a 3D image format employing a top and bottom method according to an exemplary embodiment. The top and bottom method is referred to as an up and down division method. In the 3D image format employing the top and bottom method, a single frame includes both a left eye image and a right eye image. In particular, according to the 3D image format employing the top and bottom method, a left eye image and a right eye image are arranged up and down, and the left eye image is positioned on an upper portion of the frame and the right eye image is positioned on a lower portion of the frame, though it is understood that another exemplary embodiment is not limited thereto. For example, according to another exemplary embodiment, the right eye image is positioned on the upper portion and the left eye image is positioned on the lower portion.

According to the top and bottom method, the left eye image and the right eye image photographed by a camera 100 may be vertically scaled down to, for example, a resolution of 1920X540, respectively, and then combined into a single frame to have resolution of 1920X1080. The combined image is transmitted to a TV 200.

According to the 3D image format employing the top and bottom method, a 3D image having, for example, a resolution of 1920X1080 includes a frame having a first left eye image L1 (positioned on an upper portion) photographed by a left eye camera or lens and a first right eye image R1 (positioned on a lower portion) photographed by a right eye camera, a frame having a second left eye image L2 (positioned on an upper portion) photographed by the left eye camera or lens and a second right eye image R2 (positioned on a lower portion) photographed by the right eye camera or lens, etc.

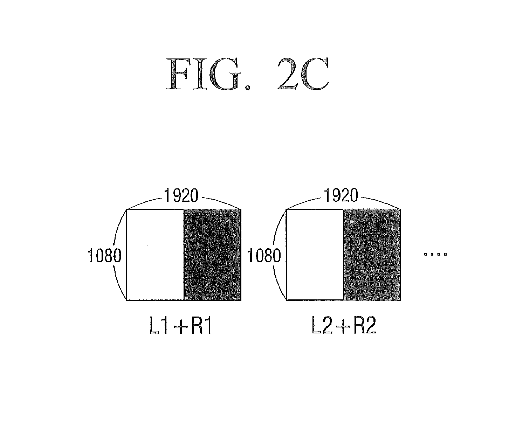

FIG. 2C is a view illustrating a 3D image format employing a side-by-side method according to an exemplary embodiment. In the 3D image format employing the side-by-side method, a single frame includes both a left eye image and a right eye image. In particular, according to the 3D image format employing the side-by-side method, a left eye image and a right eye image are arranged left and right, and the left eye image is positioned on a left portion of the frame and the right eye image is positioned on a right portion of the frame, though it is understood that another exemplary embodiment is not limited thereto. For example, according to another exemplary embodiment, the right eye image is positioned on the left portion and the left eye image is positioned on the right portion.

According to the side-by-side method, the left eye image and the right eye image photographed by a camera 100 may be horizontally scaled down to, for example, a resolution of 960X1080, respectively, and then combined into a single frame to have resolution of 1920X1080. The combined image is transmitted to a TV 200.

According to the 3D image format employing the side-by-side method, a 3D image having, for example, a resolution of 1920X1080 includes a frame having a first left eye image L1 (positioned on a left portion) photographed by a left eye camera or lens and a first right eye image R1 (positioned on a right portion) photographed by a right eye camera or lens, a frame having a second left eye image L2 (positioned on a left portion) photographed by the left eye camera or lens and a second right eye image R2 (positioned on a right portion) photographed by the right eye camera or lens, etc.

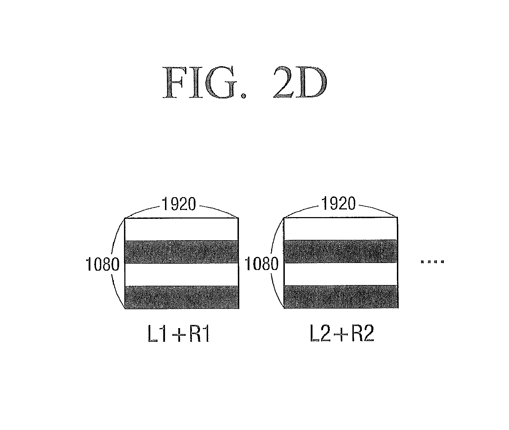

FIG. 2D is a view illustrating a 3D image format employing a horizontal interleaving method according to an exemplary embodiment. In the 3D image format employing the horizontal interleaving method, a single frame includes both a left eye image and a right eye image. In particular, according to the 3D image format employing the horizontal interleaving method, a left eye image and a right eye image are alternately arranged in each row.

In a first frame configuration method ①, the left eye image and the right eye image photographed by a camera 100 are vertically scaled down to, for example, a resolution of 1920X540, respectively, and then the scaled left eye image and the scaled right eye image are alternately arranged on an odd row and an even row so that a single frame is configured. Alternatively, in a second frame configuration method ②, the left eye images are extracted from odd rows and the right eye images are extracted from even rows, and then the extracted odd row images and the extracted even row images may be combined into a single frame.

For example, in the case of employing the first frame configuration method ①, a single frame of a 3D image includes a first row image of a first left eye image L1 photographed by a left eye camera or lens, a first row image of a first right eye image R1 photographed by a right eye camera or lens, a second row image of the first left eye image L1 photographed by the left eye camera or lens, a second row image of the first right eye image R1 photographed by the right eye camera or lens, etc.

Similarly, the following frame includes a first row image of a second left eye image L2 photographed by the left eye camera or lens, a first row image of a second right eye image R2 photographed by the right eye camera or lens, a second row image of the second left eye image L2 photographed by the left eye camera or lens, a second row image of the second right eye image R2 photographed by the right eye camera or lens, etc.

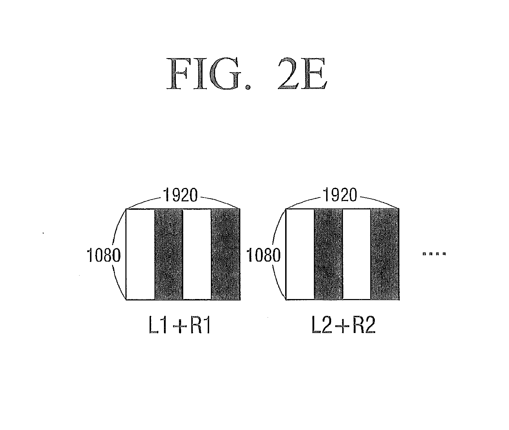

FIG. 2E is a view illustrating a 3D image format employing a vertical interleaving method according to an exemplary embodiment. In the 3D image format employing the vertical interleaving method, a single frame includes both a left eye image and a right eye image. In particular, according to the 3D image format employing the vertical interleaving method, a left eye image and a right eye image are alternately arranged in each column.

In a first frame configuration method ①, the left eye image and the right eye image photographed by a camera 100 are horizontally scaled down to, for example, a resolution of 960X1080, respectively, and then the scaled left eye image and the scaled right eye image are alternately arranged on an odd row and an even row so that a single frame is configured. Alternatively, in a second frame configuration method ②, the left eye images are extracted from odd rows and the right eye images are extracted from even rows, and then the extracted odd row images and the extracted even row images may be combined into a single frame.

For example, in the case of employing the first frame configuration method ①, a single frame of a 3D image includes a first column image of a first left eye image L1 photographed by a left eye camera or lens, a first column image of a first right eye image R1 photographed by a right eye camera or lens, a second column image of the first left eye image L1 photographed by the left eye camera or lens, a second column image of the first right eye image R1 photographed by the right eye camera lens, etc.

Similarly, the following frame includes a first column image of a second left eye image L2 photographed by the left eye camera or lens, a first column image of a second right eye image R2 photographed by the right eye camera or lens, a second column image of the second left eye image L2 photographed by the left eye camera or lens, a second column image of the second right eye image R2 photographed by the right eye camera or lens, etc.

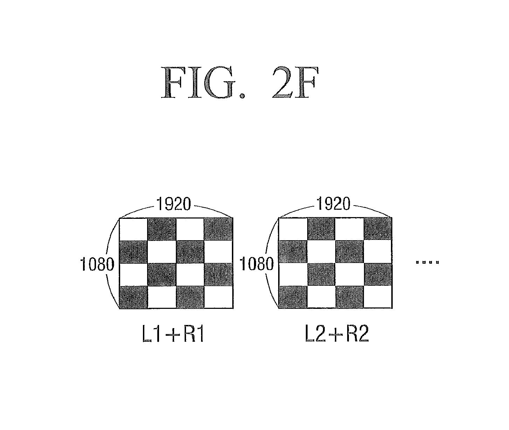

FIG. 2F is a view illustrating a 3D image format employing a checkerboard method according to an exemplary embodiment. In the 3D image format employing the checkerboard method, a single frame of a 3D image includes left eye images and right eye images. In particular, according to the 3D image format employing the checkerboard method, left eye images and right eye images are alternately arranged in each pixel or in each group of pixels.

To do so, the left eye image and the right eye image photographed by a camera 100 are extracted in each pixel or in each group of pixels, and then arranged on pixels or pixel groups of each frame.

For example, in the case of employing the checkerboard method, a single frame of a 3D image includes an image on a first row x a first column of a first left eye image L1 photographed by a left eye camera or lens, an image on a first row x a second column of a first right eye image R1 photographed by a right eye camera or lens, an image on the first row x a third column of the first left eye image L1 photographed by the left eye camera or lens, an image on the first row X a fourth column of the first right eye image R1 photographed by the right eye camera or lens, etc, in order.

Similarly, the following frame of the 3D image includes an image on a first row X a first column of a second left eye image L2 photographed by the left eye camera or lens, an image on a first row x a second column of a second right eye image R2 photographed by the right eye camera or lens, an image on the first row x a third column of the second left eye image L2 photographed by the left eye camera or lens, an image on the first row X a fourth column of the second right eye image R2 photographed by the right eye camera or lens, etc.

Referring back to FIG. 1, the camera 100 determines a 3D image format from among, for example, one or more of the above 3D formats, and transmits a 3D image to the TV 200 according to the determined 3D format.

The TV 200 which is a kind of display apparatuses receives a 3D image from a photographing apparatus such as the camera 100 or, for example, a 3D image which is photographed by the camera 100, edited/processed in a broadcasting station, and then transmitted from the broadcasting station. The TV 200 processes the received 3D image, and displays the processed 3D image on a screen. In particular, the TV 200 processes a left eye image and a right eye image with reference to a format of the 3D image, and displays the left eye image and right eye image alternately in a time-sharing manner.

The TV 200 generates a synchronization signal which allows the timing at which the left eye image and the right eye image are displayed in a time-sharing manner and then displayed to be synchronized with each other, and transmits the generated synchronization signal to the 3D glasses 300.

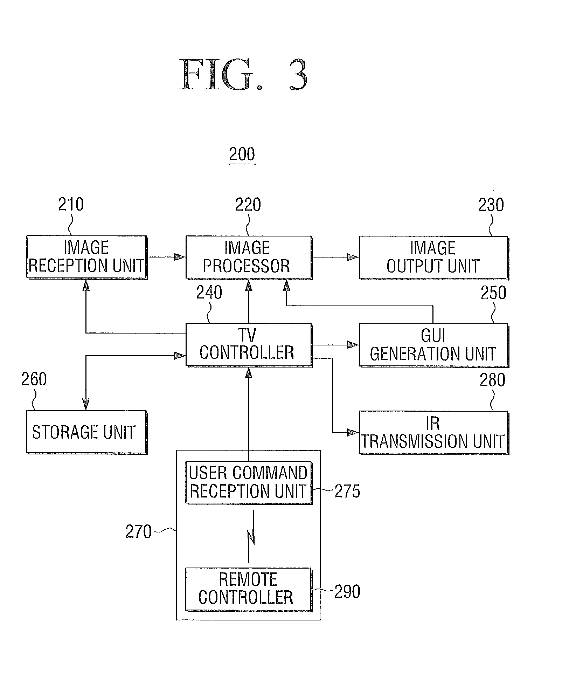

A structure of the TV 200 will be explained in detail with reference to FIG. 3. FIG. 3 is a block diagram illustrating a TV 200 according to an exemplary embodiment. Referring to FIG. 3, the TV 200 includes an image reception unit 210, an image processor 220, an image output unit 230, a TV controller 240, a graphical user interface (GUI) generation unit 250, a storage unit 260, a manipulation unit 270, and an infrared ray (IR) transmission unit 280.

The image reception unit 210 receives a broadcasting from a broadcasting station or a satellite wirelessly or with wire, and tunes to the received broadcasting. The image reception unit 210 is connected to an external device such as a camera 100, a set-top box, a reproducing apparatus, a general- or special-purpose computer, etc., and receives a 3D image from the external device. The external device is connected wirelessly or with wire through an interface such as s-Video, component, composite, D-Sub, Digital Video Interface (DVI), High-Definition Multimedia Interface (HDMI), etc.

As described above, the 3D image includes at least one frame where both a left eye image and a right eye image are included or where either a left eye image or a right eye image is included. For example, the 3D image is generated according to one of the formats described above with reference to FIGs. 2A to 2F.

The 3D image that the image reception unit 210 receives may be formed in various formats, and the format may be one of a usual frame sequence method, a top and bottom method, a side-by-side method, a horizontal interleaving method, a vertical interleaving method, a checkerboard method, etc.

The image reception unit 210 transmits the received 3D image to the image processor 220.

The image processor 220 processes the received 3D image, for example, performs video decoding, format analyzing, video scaling, etc., and adds a GUI to the 3D image.

The image processor 220 generates a left eye image and a right eye image having, for example, a resolution of 1920X1080 using a format of the 3D image input to the image reception unit 210. That is, if the 3D image is provided in a format of a top and bottom method, a side-by-side method, a horizontal interleaving method, a vertical interleaving method, or a checkerboard method, the image processor 220 extracts a left eye image and a right eye image from each frame, and scales up or interpolates the extracted left eye image and right eye image in order to generate a left eye image and a right eye image to be provided to a user. If the 3D image is provided in a format of a usual frame sequence method, the image processor 220 extracts a left eye image or a right eye image from each frame, and processes the extracted left eye image or right eye image in order to provide a user with the image. The operation of generating a left eye image and a right eye image according to a 3D image format will be explained later.

Information as to a format of an input 3D image may be included in a 3D image signal, though it is understood that another exemplary embodiment is not limited thereto. For example, if the information as to the format of the input 3D image is included in the 3D image signal, the image processor 220 analyzes the 3D image, extracts information as to the format, and processes the 3D image according to the extracted information. On the other hand, if the information as to the format of the input 3D image is not included in the 3D image signal, the image processor 220 may process the 3D image according to a format input by a user or a preset format.

The image processor 220 processes a GUI received from the GUI generation unit 250, which will be explained later, to be added to a left eye image, a right eye image, or both images.

The image processor 220 processes the extracted left eye image and right eye image in a time-sharing manner, and alternately transmits the images to the image output unit 230. That is, the image processor 220 may transmit a first left eye image L1, a first right eye image R1, a second left eye image L2, a second right eye image R2, etc, to the image output unit 130 sequentially.

The image output unit 230 provides a user with 3D images by outputting the left eye image and right eye image output from the image processor 220 in an alternate order.

The GUI generation unit 250 generates a GUI to be displayed on a display. The GUI generated by the GUI generation unit 250 is input to the image processor 220, and then added to either a left eye image or a right eye image, or both images.

The storage unit 260 stores various programs used to operate the TV 200. The storage unit 260 may be external or internal, and may be a volatile memory (such as RAM) or a non-volatile memory (such as ROM, flash memory, or a hard disk drive). The manipulation unit 270 receives a manipulation from a user. To be specific, the manipulation unit 270 receives a user's command from a manipulation device such as a remote controller 290 through a user command reception unit 275. Furthermore, the manipulation unit 270 may receive a manipulation from a user through buttons (not shown) provided on the TV 200. The manipulation unit 270 transmits the received manipulation to the TV controller 240.

The IR transmission unit 280 generates a synchronization signal which allows display timing of a left eye image and right eye image being alternately output to be synchronized with each other, and transmits the generated synchronization signal to the 3D glasses 300 in an IR format. Accordingly, the 3D glasses are able to open in an alternate order so that the image output unit 230 displays the left eye image when the left eye glass is open, and the image output unit 230 displays the right eye image when the right eye glass is open. While the present exemplary embodiment provides the synchronization signal as an IR signal, it is understood that another exemplary embodiment is not limited thereto, and may implement a different wireless communication technique (e.g., Bluetooth).

The TV controller 240 controls overall operations of the TV 200 in response to the manipulation input by a user through the manipulation unit 270.

The TV controller 240 controls the image reception unit 210 and the image processor 220 so that a 3D image is received, the received 3D image is separated into a left eye image and a right eye image, and the separated left eye image and right eye image are scaled or interpolated to fit a single screen, respectively.

The TV controller 240 controls the GUI generation unit 250 to generate a GUI corresponding to the user's manipulation received from the manipulation unit 270, and controls the IR transmission unit 280 to generate and transmit a synchronization signal which allows display timing of a left eye image and right eye image to be synchronized with each other.

The 3D glasses 300 alternately opens and closes a left eye glass and a right eye glass according to the synchronization signal received from the TV 200, and enables a user to view a left eye image and a right eye image through the left eye glass and the right eye glass, respectively.

Hereinbelow, operations of processing a 3D image according to a format of a 3D image and generating a left eye image and a right eye image according to one or more exemplary embodiments will be explained with reference to FIGs. 4A to 4C. FIGs. 4A to 4C are views provided to explain a method for processing a 3D image for each format according to one or more exemplary embodiments.

FIG. 4A shows a method for displaying a 3D image when the 3D image is received according to a usual frame sequence method according to an exemplary embodiment. Referring to FIG. 4A, the 3D image which employs a frame sequence method is formed in a format where either a left eye image or a right eye image is inserted into a single frame. For example, the 3D image is input and displayed in an order of a frame having a first left eye image L1 photographed by a left eye camera or lens, a frame having a first right eye image R1 photographed by a right eye camera or lens, a frame having a second left eye image L2 photographed by the left eye camera or lens, and a frame having a second right eye image R2 photographed by the right eye camera or lens, etc.

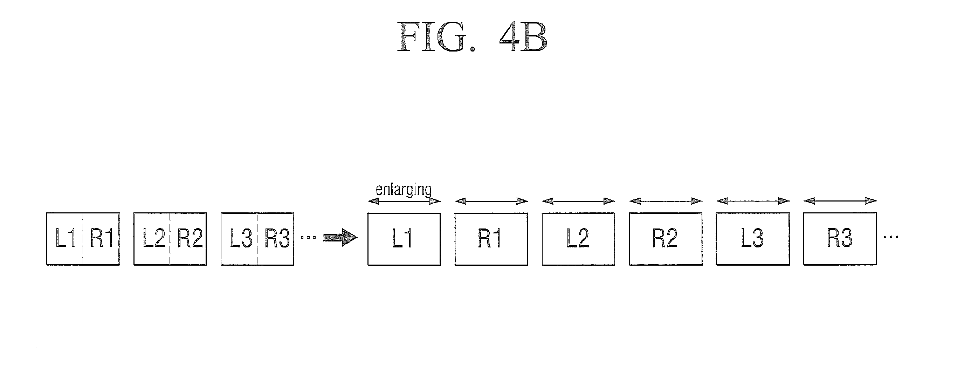

FIG. 4B shows a method for displaying a 3D image when the 3D image is received according to a side-by-side method according to an exemplary embodiment. Referring to FIG. 4B, the 3D image which employs a side-by-side method is formed in a format where both a left eye image and a right eye image are included in a single frame. For example, in the 3D image format employing the side-by-side method, the left eye image and the right eye image are arranged left and right, and the left eye image is positioned on a left portion of the frame and the right eye image is positioned on a right portion of the frame.

When the 3D image employs such a format, a TV 200 vertically divides each frame of the 3D image in half to separate a left eye image and a right eye image, scales up to twice the separated left eye image and right eye image, respectively, and displays the scaled left eye image and right eye image on a screen in an alternate order.

Therefore, a left eye image which is generated by scaling up to twice a first left eye image L1 included in a first frame, a right eye image which is generated by scaling up to twice a first right eye image R1 included in the first frame, a left eye image which is generated by scaling up to twice a second left eye image L2 included in a second frame, a right eye image which is generated by scaling up to twice a second right eye image R2 included in the second frame, etc, are displayed on a screen.

It is understood that a method for processing a format of a 3D image employing a top and bottom method according to an exemplary embodiment may be determined from the above-described method with relation to the side-by-side method. That is, for the format of the 3D image employing the top and bottom method according to an exemplary embodiment, the TV 200 vertically divides and scales up images to separate a left eye image and a right eye image, and outputs the separated left eye image and right eye image in an alternate order to provide a user with a 3D image.

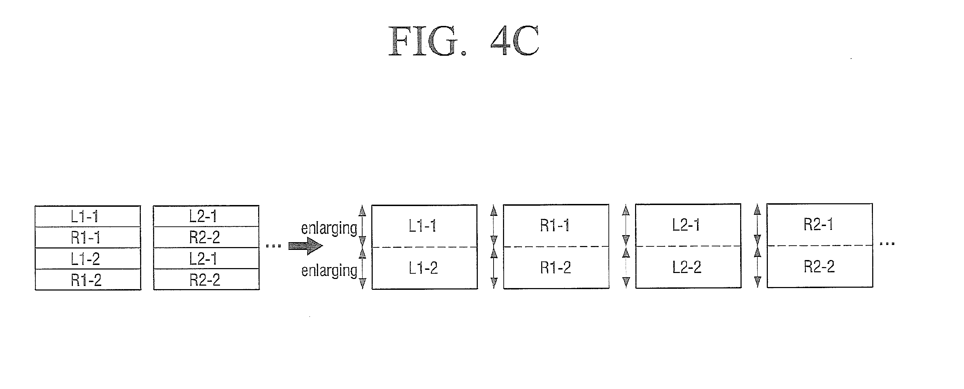

FIG. 4C shows a method for displaying a 3D image when the 3D image is received according to a horizontal interleaving method according to an exemplary embodiment. Referring to FIG. 4C, the 3D image which employs a horizontal interleaving method is formed in a format where both a left eye image and a right eye image are included in a single frame. In particular, in the 3D image format employing the horizontal interleaving method, a left eye image and a right eye image are alternately arranged in each row.

In such a format, a TV 200 divides each frame of the 3D image for each odd row and even row to separate a left eye image and a right eye image, vertically scales up to twice the separated left eye image and right eye image, respectively, and displays the scaled left eye image and right eye image on a screen in an alternate order.

For example, the 3D image is input and displayed in an order of a left eye image which is generated by scaling up to twice left eye image parts L1-1, L1-2 included in a first frame, a right eye image which is generated by scaling up to twice right eye image parts R1-1, R1-2 included in the first frame, a left eye image which is generated by scaling up to twice left eye image parts L2-1, L2-2 included in a second frame, and a right eye image which is generated by scaling up to twice right eye image parts R2-1, R2-2 included in the second frame, etc.

In a format of the 3D image employing a horizontal interleaving method according to another exemplary embodiment, the aforementioned scaling method is not used, but instead a left eye image may be generated by interpolating images in even rows using images in odd rows in a single frame, and a right eye image may be generated by interpolating images in odd rows using image in even rows in a single frame. Also, according to another exemplary embodiment, images of odd rows or images of even rows may be output to generate a left eye image or a right eye image, instead of the scaling manner or interpolating manner.

It is understood that a method for processing a format of a 3D image according to a vertical interleaving method or a checkerboard method according to exemplary embodiments may be determined from the above-described method with relation to the horizontal interleaving method.

For example, in the 3D image format employing the vertical interleaving method according to an exemplary embodiment, a 3D image may be provided to a user in such a manner of scaling or interpolating images for each column to separate left eye images and right eye images, and alternately outputting the separated left eye images and right eye images. Moreover, in the 3D image format employing the checkerboard method according to an exemplary embodiment, images may be scaled or interpolated for each pixel or each pixel group.

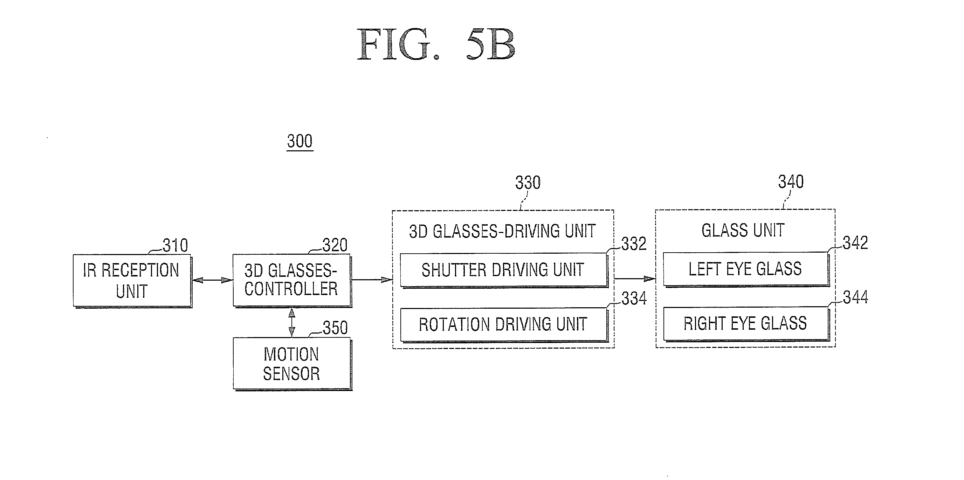

Hereinbelow, 3D glasses 300 according to one or more exemplary embodiments will be explained in detail with reference to FIGs. 5A and 5B.

FIG. 5A is a perspective view illustrating an appearance of 3D glasses 300 according to an exemplary embodiment. Referring to FIG. 5A, the 3D glasses 300 includes a left eye glass 342 and a right eye glass 344 which are capable of rotating in a clockwise direction or a counter clockwise direction. The left eye glass 342 and the right eye glass 344 are configured in a circular shape to be rotated in the present exemplary embodiment, but it is understood that any shape which can be rotated may be applied to the left eye glass 342 and the right eye glass 344 according to other exemplary embodiments.

FIG. 5B is a block diagram illustrating 3D glasses 300 according to an exemplary embodiment. Referring to FIG. 5B, the 3D glasses 300 includes an infrared ray (IR) reception unit 310, a 3D glasses-controller 320, a 3D glasses-driving unit 330, a glass unit 340, and a motion sensor 350.

The IR reception unit 310 receives a synchronization signal for a 3D image from an IR transmission unit 280 of a TV 200, set-top box, standalone device, etc. which is connected wirelessly or with wire. In particular, the IR transmission unit 280 radiates a synchronization signal using infrared rays which travel straight, and the IR reception unit 310 receives the synchronization signal from the radiated infrared rays.

For example, the synchronization signal transmitted from the IR transmission unit 280 to the IR reception unit 310 may be a signal being output alternately with a high level and a low level at predetermined time intervals. A left eye image is transmitted while a high level is presented and a right eye image is transmitted while a low level is presented, or vice-versa according to another exemplary embodiment.

The IR reception unit 310 transmits the received synchronization signal to the 3D glasses-controller 320.

The 3D glasses-controller 320 controls overall operations of the 3D glasses 300. The 3D glasses-controller 320 generates a control signal based on the synchronization signal received from the IR reception unit 310, and transmits the generated control signal to the 3D glasses-driving unit 330 to control the 3D glasses-driving unit 330. The 3D glasses-controller 320 controls the 3D glasses-driving unit 330 so that the 3D glasses-driving unit 330 generates a driving signal to drive the glass unit 340 based on the synchronization signal.

As shown in FIG. 5B, the 3D glasses-driving unit 330 includes a shutter driving unit 332 and a rotation driving unit 334. The shutter driving unit 332 drives shutters of the glass unit 340, and the rotation driving unit 334 rotates glasses of the glass unit 340.

The shutter driving unit 332 generates a signal to drive a shutter based on the control signal received from the 3D glasses-controller 320. Since the glass unit 340 includes the left eye glass 342 and the right eye glass 344, the shutter driving unit 332 generates a signal to drive a shutter of the left eye glass 342 and a signal to drive a shutter of the right eye glass 344, and transmits the generated signals to the left eye glass 342 and the right eye glass 344, respectively.

The rotation driving unit 334 generates a signal for driving a rotation based on a signal to control a rotation received from the 3D glasses-controller 320. Herein, the rotation controlling signal includes at least one of information as to a rotation angle and information as to a rotation direction. Since the glass unit 340 includes the left eye glass 342 and the right eye glass 344, the rotation driving unit 334 generates a signal to drive a rotation of the left eye glass 342 and a signal to drive a rotation of the right eye glass 344, and transmits the generated signals to the left eye glass 342 and the right eye glass 344, respectively.

The glass unit 340 includes the left eye glass 342 and the right eye glass 344 as described above. The glass unit 340 opens and closes the left eye glass 342 and the right eye glass 344 according to the shutter driving signal received from the shutter driving unit 332, and rotates the left eye glass 342 and the right eye glass 344 according to the rotation driving signal received from the rotation driving unit 334.

The shutters of the left eye glass 342 and the right eye glass 344 may be implemented using liquid crystal. That is, the glass unit 340 may open and close the shutters using the liquid crystal of the left eye glass 342 and the right eye glass 344.

The motion sensor 350 senses information as to a motion of the 3D glasses 300. Herein, the motion information includes at least one of information as to a rotation direction of the 3D glasses 300 and information as to a rotation angle of the 3D glasses 300. The motion sensor 350 may be implemented using an acceleration sensor, a gyroscope sensor, a geometric sensor, a gravity sensor, etc.

The power supply unit 360 supplies power to the 3D glasses 300. The 3D glasses-controller 320 controls an on/off operation of the power supply unit 360.

The light emitted from the TV 200 may be polarized. If the TV 200 is a liquid crystal display (LCD) TV, the light output from the TV 200 may be emitted in a predetermined direction in a linear polarization state due to the characteristics of the LCD TV.

The shutters of the left eye glass 342 and the right eye glass 344 of the 3D glasses 300 may also be implemented using liquid crystal. Therefore, the left eye glass 342 and the right eye glass 344 of the 3D glasses 300 may also be linearly polarized glasses.

When a user views the TV 200 while wearing the 3D glasses 300, if the image output from the TV 200 is polarized in the direction parallel to the polarization direction of the glass unit 340, the screen of the TV 200 appears to be bright, if the image output from the TV 200 is polarized in the direction vertical to the polarization direction of the glass unit 340, the screen of the TV 200 appears to be dark. That is, if a user moves his or her head while wearing the 3D glasses 300, the user may feel that the brightness of a screen of the TV 200 is being changed.

To prevent the above phenomenon, the controller 320 of the 3D glasses 300 according to an exemplary embodiment controls the 3D glasses-driving unit 330 to rotate the left eye glass 342 and the right eye glass 344 of the glass unit 340 based on the motion information sensed by the motion sensor 350 so that the glass unit 340 is polarized constantly in a particular direction.

For example, the particular direction represents the polarization direction of the light emitted from the TV 200. The controller 320 controls the left eye glass 342 and the right eye glass 344 of the glass unit 340 to be rotated in the opposite direction to the direction that the 3D glasses rotate at the same angle that the 3D glasses rotate so that the polarization direction of the glass unit 340 is maintained constantly in a particular direction. To achieve this, the motion sensor 350 senses the rotation direction and the rotation angle of the 3D glasses 300 as the motion information, and the controller 320 controls the glass unit 340 to be rotated in the opposite direction to the direction that the 3D glasses rotate at the sensed angle.

As described above, since the left eye glass 342 and the right eye glass 344 of the 3D glasses 300 rotate in the opposite direction to the direction that the 3D glasses 300 rotate at the same angle that the 3D glasses 300 rotate, the 3D glasses 300 may maintain the polarized light in a certain direction irrespective of a user's motion. Therefore, when a user views the TV 200 while wearing the 3D glasses 300, the user may view 3D images having constant brightness even if the user turns his or her head.

The 3D glasses 300 receive power through the power supply unit 360. For example, the 3D glasses 300 may receive power through a detachable battery. A user may use the 3D glasses 300 only when viewing 3D images such that the 3D glasses 300 are infrequently used. However, since it is difficult for a user to recognize whether the 3D glasses 300 are turned on or off, the battery may be wasted while the battery is unnecessarily turned on. To prevent the battery from being wasted, the 3D glasses-controller 320 may control an on/off operation of the 3D glasses 300 using the motion information sensed by the motion sensor 360.

For example, the 3D glasses-controller 320 calculates a slope of the 3D glasses 300 with respect to the gravity direction, and controls an on/off operation of the 3D glasses 300 according to the calculated slope. In more detail, if a slope of the 3D glasses 300 is within a predetermined range, the controller 320 controls the 3D glasses 300 to be turned on, and if a slope of the 3D glasses 300 is beyond a predetermined range, the controller 320 controls the 3D glasses 300 to be turned off.

Herein, the predetermined range may represent a range of the slope of the 3D glasses 300 within which a user is using the 3D glasses 300. In the predetermined range, the angle between the gravity direction and the slope direction of the 3D glasses 300 may be within a certain angle. For example, in the predetermined range, the angle between the gravity direction and the slope direction of the 3D glasses may be less than 30 degrees. The slope of the 3D glasses 300 may represent the degree of the slope of the 3D glasses 300 in equilibrium. In the present exemplary embodiment, the slope direction of the 3D glasses 300 refers to a lower direction of a surface formed by a frame of the 3D glasses 300. If the slope direction of the 3D glasses 300 corresponds to the gravity direction, it may be supposed that the 3D glasses 300 are in equilibrium. Therefore, the slope of the 3D glasses 300 may be represented as the angle between the slope direction of the 3D glasses and the gravity direction.

As described above, the 3D glasses-controller 320 controls the on/off operation of the 3D glasses 300 according to the slope of the 3D glasses 300. When a user uses the 3D glasses 300, the slope direction of the 3D glasses 300 may not go excessively beyond the gravity direction. When a user does not use the 3D glasses 300, the slope direction of the 3D glasses 300 may be opposite to the gravity direction since the 3D glasses 300 may be placed face down. Therefore, a user may control an on/off operation of the 3D glasses 300 according to the position of the 3D glasses 300, thereby more conveniently controlling the on/off operation of the 3D glasses 300.

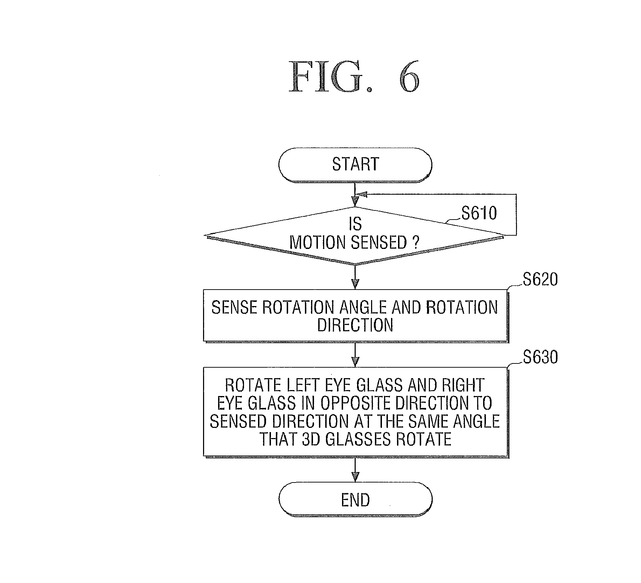

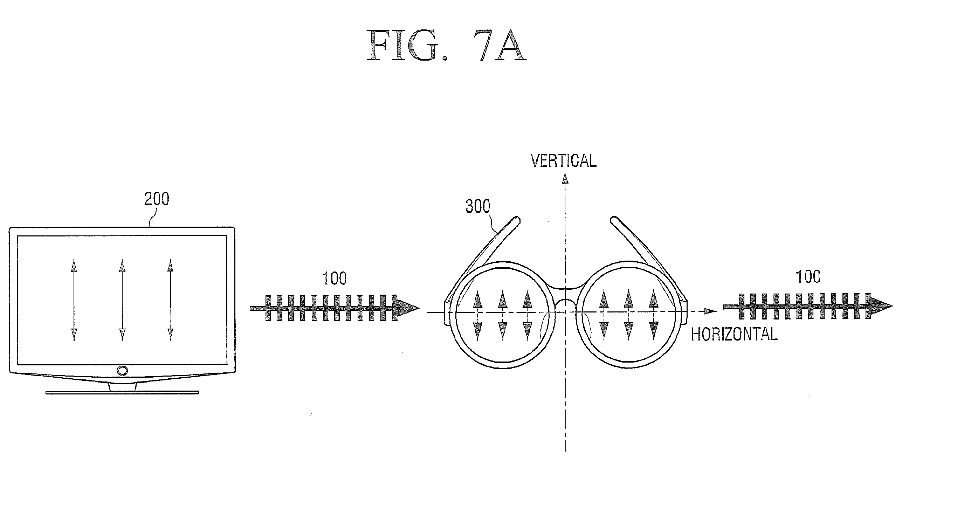

Hereinbelow, a method for controlling 3D glasses 300 to maintain polarized light in a certain direction according to one or more exemplary embodiments will be explained with reference to FIGs. 6 and 7A to 7C.

FIG. 6 is a flowchart provided to explain a method for controlling 3D glasses to maintain a polarized light in a certain direction according to an exemplary embodiment. Referring to FIG. 6, the 3D glasses 300 determine whether a motion sensor 350 senses a motion of the 3D glasses 300 (S610). If the motion is sensed (S610-Y), the 3D glasses 300 sense a rotation angle and a rotation direction of the 3D glasses 300 from information on the sensed motion (S620).

The 3D glasses 300 rotate the left eye glass 342 and the right eye glass 344 of the glass unit 340 in the opposite direction to the direction that the 3D glasses 300 rotate at the same angle that the 3D glasses 300 rotate in order to maintain the polarized light of the glass unit 340 in the predetermined direction (S630).

As described above, since the left eye glass 342 and the right eye glass 344 of the 3D glasses 300 are rotated in the opposite direction to the direction that the 3D glasses 300 rotate at the same angle that the 3D glasses 300 rotate, the 3D glasses 300 may maintain the polarized light in a certain direction irrespective of a user's motion. Therefore, when a user views a TV 200 while wearing the 3D glasses 300, the user may view 3D images having constant brightness even if the user turns his or her head.

FIGs. 7A to 7C are views provided to explain a process of rotating a glass unit 340 to maintain polarized light of 3D glasses 300 in a certain direction according to an exemplary embodiment.

FIG. 7A shows a case in which a direction of polarized light output from a TV 200 corresponds to a direction of the polarized light of the 3D glasses 300. As shown in FIG. 7A, if the direction of the polarized light output from the TV 200 corresponds to the direction of the polarized light of the 3D glasses 300, 100 percent of the light output from the TV 200 penetrates the 3D glasses 300.

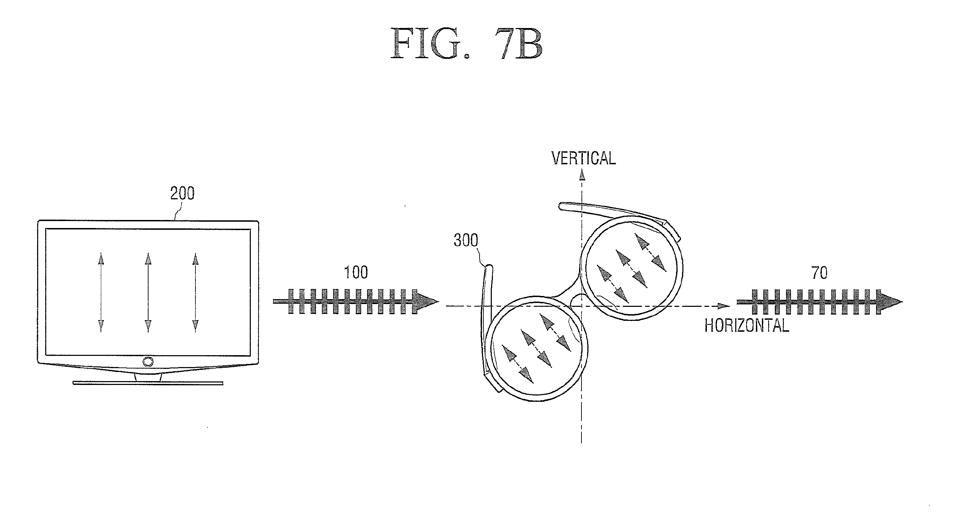

FIG. 7B shows a case in which the 3D glasses 300 rotate at a predetermined angle, and thus the direction of the polarized light output from the TV 200 does not correspond to the direction of the polarized light of the 3D glasses 300. As shown in FIG. 7B, if the direction of the polarized light output from the TV 200 does not correspond to the direction of the polarized light of the 3D glasses 300, only 70 percent of the light output from the TV 200 penetrates the 3D glasses 300.

As described above, when the 3D glasses 300 rotate, it appears as if the brightness of light output from the TV 200 is changed since the direction of the polarized light output from the TV 200 does not correspond to the direction of the polarized light of the 3D glasses 300. Therefore, a user wearing the 3D glasses 300 may feel as if the brightness of a 3D image output from the TV 200 is changed when the user turns his or her head.

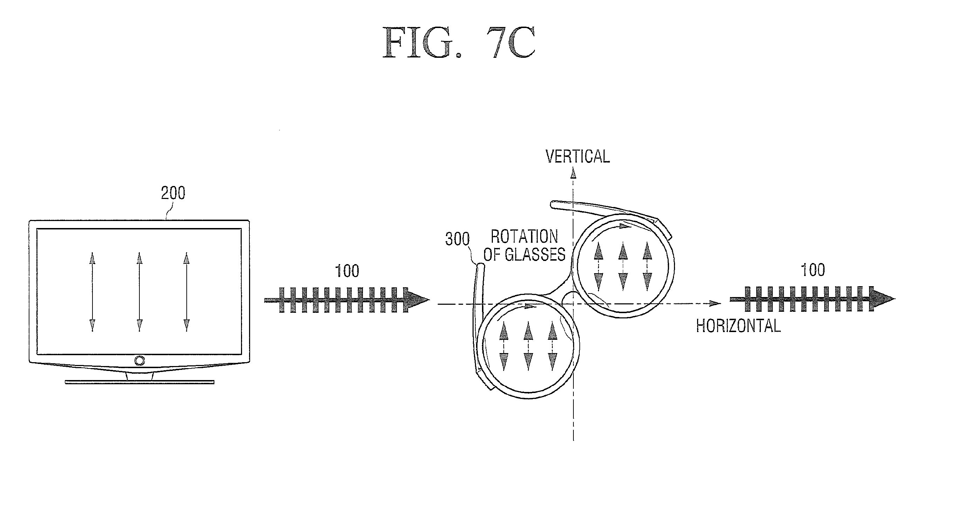

However, as shown in FIG. 7C, since the left eye glass 342 and the right eye glass 344 of the 3D glasses 300 according to the present exemplary embodiment are rotated in the direction opposite the direction which the 3D glasses 300 rotate, the direction of the polarized light output from the TV 200 corresponds to the direction of the polarized light of the 3D glasses 300. Therefore, 100 percent of the light output from the TV 200 penetrates the 3D glasses 300.

As described above, the left eye glass 342 and the right eye glass 344 of the 3D glasses 300 according to the present exemplary embodiment are rotated in the direction opposite the direction which the 3D glasses 300 rotate, and thus a user may view 3D images having constant brightness even if the user wearing the 3D glasses 300 turns his or her head.

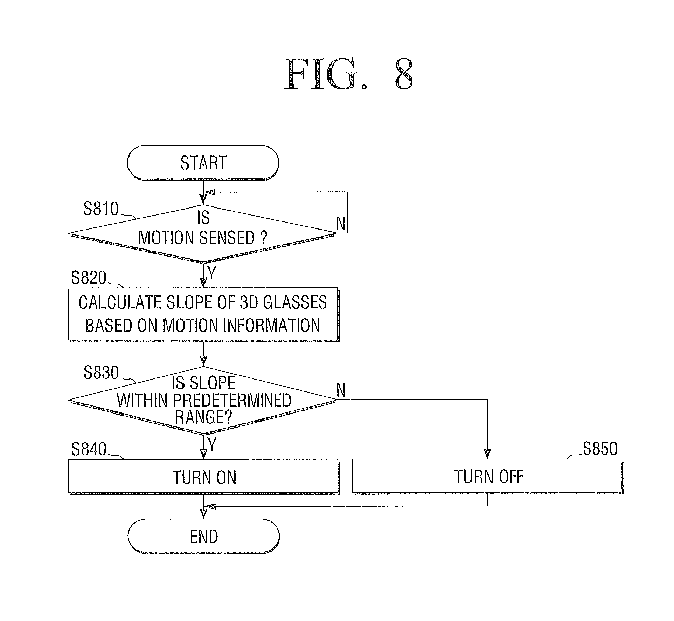

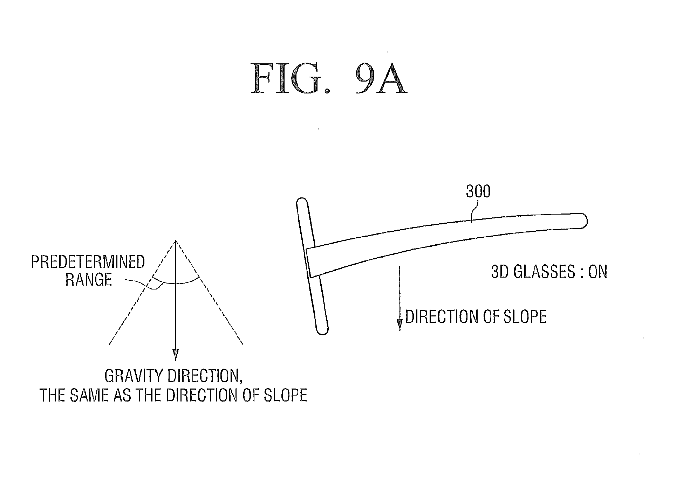

Hereinbelow, a method for controlling an on/off operation of 3D glasses 300 according to a slope of the 3D glasses 300 according to one or more exemplary embodiments will be explained with reference to FIGs. 8 and 9A to 9C.

FIG. 8 is a flowchart provided to explain a method for controlling an on/off operation of 3D glasses 300 in accordance with a slope of the 3D glasses 300 according to an exemplary embodiment. Referring to FIG. 8, the 3D glasses 300 determine whether a motion sensor 350 senses a motion of the 3D glasses 300. If the motion is sensed (S810-Y), the 3D glasses 300 calculate a slope of the 3D glasses 300 with respect to the gravity direction based on motion information (S820).

If the slope of the 3D glasses 300 with respect to the gravity direction is within a predetermined range (S830-Y), the 3D glasses 300 are turned on or kept on (S840). On the other hand, if the slope of the 3D glasses 300 with respect to the gravity direction goes beyond a predetermined range (S830-N), the 3D glasses 300 are turned off (S850).

Herein, the predetermined range represents the range of the slope of the 3D glasses 300 within which a user is using the 3D glasses. In the predetermined range, the angle between the gravity direction and the slope direction of the 3D glasses 300 may be within a certain angle. For example, in the predetermined range, the angle between the gravity direction and the slope direction of the 3D glasses 300 may be less than 30 degrees. The slope of the 3D glasses 300 may represent the degree of the slope of the 3D glasses 300 in equilibrium. In the present exemplary embodiment, the slope direction of the 3D glasses 300 refers to a lower direction of a surface formed by a frame of the 3D glasses 300. If the slope direction of the 3D glasses 300 corresponds to the gravity direction, it may be supposed that the 3D glasses 300 are in equilibrium. Therefore, the slope of the 3D glasses 300 may be represented as the angle between the slope direction of the 3D glasses and the gravity direction.

As described above, 3D glasses-controller 320 controls the on/off operation of the 3D glasses 300 according to the slope of the 3D glasses 300. When a user uses the 3D glasses 300, the slope direction of the 3D glasses 300 may not go excessively beyond the gravity direction. When a user does not use the 3D glasses 300, the slope direction of the 3D glasses 300 may be opposite to the gravity direction since the 3D glasses 300 may be placed face down. Therefore, a user may control an on/off operation of the 3D glasses 300 according to the position of the 3D glasses 300, thereby more conveniently controlling the on/off operation of the 3D glasses 300.

FIGs. 9A to 9C are views provided to explain a process of controlling an on/off operation of 3D glasses in accordance with a slope of the 3D glasses 300 according to an exemplary embodiment.

FIG. 9A shows a case in which a gravity direction corresponds to a slope direction of the 3D glasses 300, that is, the slope of the 3D glasses 300 is 0 degrees. As shown in FIG. 9A, the case in which the gravity direction corresponds to the slope direction of the 3D glasses 300 may represent that the 3D glasses 300 are in equilibrium and a user desires to view a TV 200. If the gravity direction corresponds to the slope direction of the 3D glasses 300, the slope of the 3D glasses 300, that is, 0 degrees, is within a predetermined range, and thus the 3D glasses 300 are turned on or kept on.

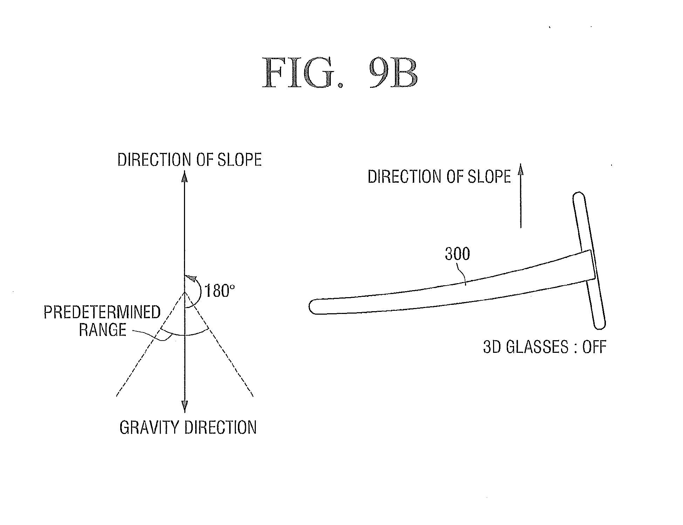

FIG. 9B shows a case in which the gravity direction is opposite to the slope direction of the 3D glasses 300, that is, the slope of the 3D glasses 300 is 180 degrees. As shown in FIG. 9B, the case in which the gravity direction is opposite to the slope direction of the 3D glasses 300 may represent that the 3D glasses are placed faced down and a user does not view the TV 200. As described above, if the gravity direction is opposite to the slope direction of the 3D glasses 300, the slope of the 3D glasses 300, that is, 180 degrees, is beyond a predetermined range, and thus the 3D glasses 300 are turned off or kept off.

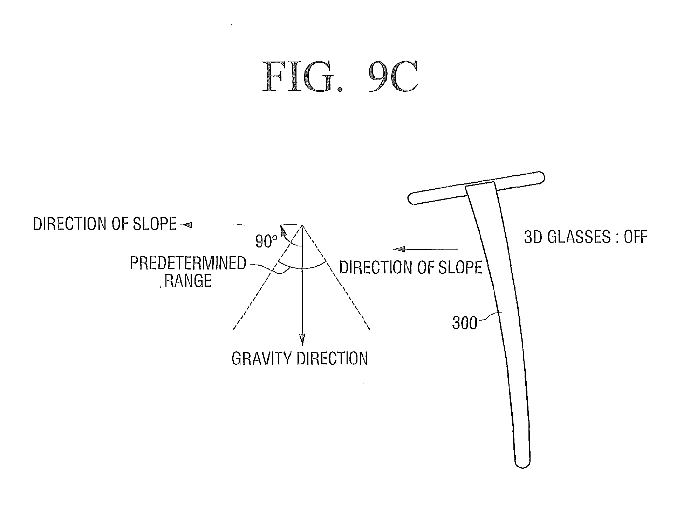

FIG. 9C shows a case in which the gravity direction is perpendicular to the slope direction of the 3D glasses 300, that is, the slope of the 3D glasses 300 is 90 degrees. As shown in FIG. 9C, the case in which the gravity direction is perpendicular to the slope direction of the 3D glasses 300 may represent that the 3D glasses are folded and a user does not view the TV 200. As described above, if the gravity direction is perpendicular to the slope direction of the 3D glasses 300, the slope of the 3D glasses 300, that is, 90 degrees, is beyond a predetermined range, and thus the 3D glasses 300 are turned off or kept off.

The 3D glasses 300 control an on/off operation of the 3D glasses 300 according to the slope of the 3D glasses 300. When a user uses the 3D glasses 300, the slope direction of the 3D glasses 300 may generally not go excessively beyond the gravity direction. When a user does not use the 3D glasses 300, the slope direction of the 3D glasses 300 may be opposite to the gravity direction since a user may place the 3D glasses 300 face down. Therefore, an on/off operation of the 3D glasses 300 is controlled according to the position of the 3D glasses 300, and thus a user may control an on/off operation of the 3D glasses 300 more conveniently.

The TV 200 is provided as a display apparatus in there present exemplary embodiment, though it is understood that another exemplary embodiment is not limited thereto. Any apparatus which displays a 3D image may be provided according to another exemplary embodiment. For example, a display apparatus may be a 3D monitor, a 3D image projector, etc.

According to the various exemplary embodiments as described above, 3D glasses which rotates a glass unit based on sensed motion information to maintain a polarized light output from the glass unit in a certain direction, a method for controlling the 3D glasses, and a method for controlling an on/off operation of the 3D glasses are provided. Accordingly, a user may view 3D images in various positions. An on/off operation of the 3D glasses is managed based on motion information, and thus a user may view 3D images in various positions.

While not restricted thereto, exemplary embodiments can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, exemplary embodiments may be written as computer programs transmitted over a computer-readable transmission medium, such as a carrier wave, and received and implemented in general-use or special-purpose digital computers that execute the programs. Moreover, while not required in all aspects, one or more units of the TV 200 and the 3D glasses 300 can include a processor or microprocessor executing a computer program stored in a computer-readable medium, such as a local storage.

The foregoing exemplary embodiments and advantages are merely exemplary and are not to be construed as limiting the present inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. Three-dimensional (3D) glasses which are interlocking with a 3D display apparatus, the 3D glasses comprising:
a glass unit through which light is polarized;
a driving unit which rotates the glass unit;
a motion sensor which senses information as to a motion of the 3D glasses;
and
a controller which controls the driving unit to rotate the glass unit based on the sensed motion information in order to maintain a polarization direction of the glass unit in a particular direction.

2. The 3D glasses as claimed in claim 1, wherein the motion sensor senses a rotation direction and a rotation angle of the 3D glasses using the motion information, and the controller controls the glass unit to be rotated in a direction opposite the sensed rotation direction at the sensed angle.

3. The 3D glasses as claimed in claim 1 or 2, wherein the particular direction corresponds to a polarization direction of an image output from the 3D display apparatus.

4. The 3D glasses as claimed in one of claims 1 to 3, wherein the glass unit comprises a left eye glass and a right eye glass which are capable of being rotated.

5. The 3D glasses as claimed in one of claims 1 to 4, wherein the glass unit comprises a left eye glass made of liquid crystal and a right eye glass made of liquid crystal.

6. A method for controlling three-dimensional (3D) glasses which are interlocking with a 3D display apparatus, the method comprising:
sensing information on a motion of the 3D glasses; and
rotating a glass unit of the 3D glasses based on the sensed motion information to maintain a polarization direction of the 3D glasses in a particular direction.

7. The method as claimed in claim 6, wherein the sensing senses a rotation direction and a rotation angle of the 3D glasses using the motion information, and the rotating rotates the glass unit in a direction opposite the sensed rotation direction at the sensed angle.

8. The method as claimed in claim 6 or 7, wherein the particular direction corresponds to a polarization direction of an image output from the 3D display apparatus.

9. The method as claimed in one of claims 6 to 8, wherein the glass unit comprises a left eye glass and a right eye glass which are capable of being rotated.

10. The method as claimed in one of claims 6 to 9, wherein the glass unit comprises a left eye glass made of liquid crystal and a right eye glass made of liquid crystal.

11. The 3D as claimed in claim 1, wherein the controller controls an on/off operation of the 3D glasses based on the motion information of the 3D glasses.

12. The 3D glasses as claimed in claim 11, wherein the controller calculates a slope of the 3D glasses with respect to the gravity direction, and controls the on/off operation of the 3D glasses according to the slope.

13. The 3D glasses as claimed in claim 12, wherein if the slope of the 3D glasses is within a particular range, the controller controls the 3D glasses to be turned on, and if the slope of the 3D glasses is beyond a particular range, the controller controls the 3D glasses to be turned off.

14. The method as claimed in claim 6, further comprising:
controlling the on/off operation of the 3D glasses based on the motion information of the 3D glasses.

15. The method as claimed in claim 14, wherein the controlling comprises:
calculating a slope of the 3D glasses with respect to the gravity direction based on the motion information of the 3D glasses; and
controlling, if the slope of the 3D glasses is within in a particular range, the 3D glasses to be turned on, and controlling, if the slope of the 3D glasses is beyond a particular range, the 3D glasses to be turned off.
